# EUROPÄISCHE PATENTSCHRIFT

(11) **EP 1 116 665 B1**
(45) Veröffentlichungstag und Bekanntmachung des Hinweises auf die Patenterteilung: **23.07.2003**
(21) Anmeldenummer: 00126058.7
(22) Anmeldetag: 29.11.2000
(51) Int. Cl.: B65B 65/02, G01M 13/02

(54) **VERFAHREN ZUR ÜBERWACHUNG DES VERSCHLEISSES EINER ANTRIEBSEINRICHTUNG SOWIE DIE ANTRIEBSEINRICHTUNG EINER MASCHINE DER TABAKVERARBEITENDEN INDUSTRIE**
Method for monitoring the wear of a driving system as well as the driving system of a machine for the tabacco processing industry
Procédé pour surveiller l'usure d'un dispositif d'entraînement ainsi que ledit dispositif d'une machine pour l'industrie de traitement du tabac

(30) Priorität: 11.01.2000 DE 10000715
(43) Veröffentlichungstag der Anmeldung: 18.07.2001
(73) Patentinhaber: TOPACK Verpackungstechnik GmbH, 21493 Schwarzenbek (DE)
(72) Erfinder: Glösmann, Josef, 21035 Hamburg (DE)
(74) Vertreter: Seemann, Ralph, Dr. Dipl.-Phys.

(56) Entgegenhaltungen:
- DE-A- 3 926 413
- US-A- 4 046 027
- US-A- 4 748 988
- US-A- 5 019 017

## Beschreibung

Die vorliegende Erfindung betrifft ein Verfahren zur Überwachung des Verschleißes einer Antriebseinrichtung einer Maschine der tabakverarbeitenden Industrie und eine Antriebseinrichtung einer Maschine der tabakverarbeitenden Industrie mit wenigstens einem antreibenden Element und wenigstens einem angetriebenen Element.

Bei Antriebseinrichtungen für Maschinen der tabakverarbeitenden Industrie ist zu berücksichtigen, daß die angetriebenen Elemente vielfach sehr präzise bezüglich der räumlichen Auslenkung geführt werden müssen und zum Teil sehr schnell bewegt werden. Hierbei sind an die Genauigkeit der Antriebseinrichtung hohe Anforderungen gestellt. Aneinander reibende bzw. in Wirkverbindung stehende Elemente der Antriebseinrichtung unterliegen einem Verschleiß. Dieser ist insbesondere dann hoch, wenn eine Wechsellast auf die Elemente der Antriebseinrichtung wirkt.

Aufgrund des Verschleißes kommt es zu Ungenauigkeiten bezüglich der räumlichen Auslenkung der anzutreibenden Elemente. Es ist demnach notwendig, zu sehr verschlissene Elemente rechtzeitig auszutauschen.

Damit liegt der vorliegenden Erfindung die Aufgabe zugrunde, ein Verfahren zur Überwachung des Verschleißes einer Antriebseinrichtung einer Maschine der tabakverarbeitenden Industrie und eine entsprechende Antriebseinrichtung anzugeben, mit der eine effektive und sichere Überwachung des Verschleißes von Elementen der Antriebseinrichtung möglich ist. Es ist ferner Aufgabe der vorliegenden Erfindung ein entsprechendes Überwachungsverfahren und eine Antriebseinrichtung anzugeben, mit der vor Erreichen eines kritischen Verschleißzustandes von entsprechenden Elementen der Antriebseinrichtung einer Bedienperson oder einer Leitstelle eine Warnung zugeführt wird, und zwar bevor es zu Betriebsstörungen bzw. Betriebsunterbrechungen der Maschine der tabakverarbeitenden Industrie kommt. Das entsprechende Überwachungsverfahren und die entsprechende Antriebseinrichtung soll dabei kostengünstig und relativ einfach zu realisieren sein.

Gelöst wird diese Aufgabe durch ein Verfahren zur Überwachung des Verschleißes einer Antriebseinrichtung einer Maschine der tabakverarbeitenden Industrie mit wenigstens einem antreibenden Element und wenigstens einem angetriebenen Element mit den folgenden Verfahrensschritten
- Aufnehmen eines ersten Wertes, der ein Maß des Antriebs des wenigstens einen antreibenden Elements ist,
- Aufnehmen eines zweiten Wertes, der ein Maß des Antriebs des wenigstens einen angetriebenen Elements ist, und
- Vergleich der aufgenommen Werte.

Durch dieses erfindungsgemäße Verfahren ist es möglich, den Verschleiß der Antriebseinrichtung und insbesondere entsprechender Elemente der Antriebseinrichtung zu überwachen, indem die dem jeweiligen Antrieb von Elementen zugeordneten Werte verglichen werden, wobei bei einem Maß einer Abweichung des aufgenommenen ersten Wertes von dem aufgenommenen zweiten Wert, bei dem allerdings ein Faktor zu berücksichtigen ist, der insbesondere das Übersetzungsverhältnis widerspiegelt, ein entsprechendes Maß des Verschleißes bedeutet.

Vorzugsweise wird die Antriebseinrichtung angehalten, wenn der Vergleich der Werte einen Unterschied ergibt, der größer als ein vorgebbarer Wert ist. Hierbei ist vorzugsweise der vorgebbare Wert ein Wert, der noch so klein ist, daß es noch nicht zu Störungen im Betrieb der Maschine der tabakverarbeitenden Industrie wie insbesondere eine Zigarettenverpackungsmaschine, kommt. Vorzugsweise wird die gesamte Maschine oder ein Teil der Maschine der tabakverarbeitenden Industrie angehalten, wenn der Vergleich der Werte einen Unterschied dieser Werte ergibt, der größer als ein vorgebbarer Wert ist.

Vorzugsweise wird bei wenigstens einem weiteren vorgebbaren Wert, der insbesondere kleiner ist als der vorhergenannte Wert, eine Warnfunktion, insbesondere eine Warnanzeige, in Betrieb gesetzt. Diese Warnanzeige ermöglicht es der Betriebsperson rechtzeitig dafür Sorge zu tragen, daß entsprechende Ersatzteile vorhanden sind. Die Warnfunktion kann vorzugsweise auch zu einer Leitstelle weitergeleitet werden.

Vorzugsweise wird ein Verschleißgrad in Abhängigkeit des Unterschieds der aufgenommenen Werte angezeigt. Auch hierbei ist bei dem Unterschied der aufgenommenen Werte insbesondere zu berücksichtigen, daß ein Faktor zu dem einen Wert multipliziert werden sollte, der insbesondere das Übersetzungsverhältnis des wenigstens einen antreibenden Elements zu dem wenigstens einen angetriebenen Element berücksichtigt. Vorzugsweise wird eine lineare Anzeige verwendet, die den Verschleißgrad linear anzeigt. Ferner vorzugsweise wird eine exponentielle oder logarithmische Anzeige verwendet.

Vorzugsweise treibt das angetriebene Element wenigstens ein weiteres Element an, das einen kontinuierlichen Antrieb in eine intermittierende Bewegung überführt. Bei derartigen Überführungen unterliegt die Antriebseinrichtung einer Wechsellast, bei der ein erhöhter Verschleiß Platz greift.

Erfindungsgemäß ist eine Antriebseinrichtung einer Maschine der tabakverarbeitenden Industrie mit wenigstens einem antreibenden Element und wenigstens einem angetriebenen Element dadurch weitergebildet, daß das antreibende Element einen ersten Meßwertgeber umfaßt, der einen ersten Wert, der einem Maß des Antriebs des antreibenden Elements entspricht, ausgibt, daß das angetriebene Element einen zweiten Meßwertgeber umfaßt, der einen zweiten Wert, der einem Maß des Antriebs des angetriebenen Elements entspricht, ausgibt, und daß eine Signalverarbeitungsvorrichtung vorgesehen ist, die mit den Meßwertgebern verbindbar ist.

Durch diese erfindungsgemäße Antriebseinrichtung ist es auf einfache Art möglich, den Grad des Verschleißes von einem oder mehreren Elementen der Antriebseinrichtung festzustellen. Hierbei werden insbesondere die ausgegebenen ersten und zweiten Werte in der Signalverarbeitungsvorrichtung nach Multiplikation mit einem Faktor, der insbesondere das Übersetzungsverhältnis des wenigstens einen angetriebenen Elements zu dem wenigstens einen antreibenden Element umfaßt, verglichen oder subtrahiert. Der Unterschied, der sich bei diesem Vergleich ergibt bzw. der sich nach der Subtraktion ergebende Wert ist ein Maß des Verschleißes der Antriebseinrichtung.

Vorzugsweise umfaßt das antreibende Element ein erstes Rad, insbesondere ein erstes Zahnrad, und das angetriebene Element ein zweites Rad, insbesondere ein zweites Zahnrad. Durch diese vorzugsweise Ausgestaltung der Antriebseinrichtung ist eine besonders präzise arbeitende Antriebseinrichtung realisierbar.

Wenn vorzugsweise ferner das antreibende Element einen Antriebsriemen, insbesondere einen Zahnriemen umfaßt, der in Wirkverbindung mit dem ersten Rad und dem zweiten Rad steht, ist eine präzise und ruhig antreibende Antriebseinrichtung realisierbar. Ferner ist auf diese Art und Weise eine Antriebseinrichtung realisierbar, deren dem Verschleiß im wesentlichen unterliegendes Element, nämlich der Antriebsriemen, insbesondere der Zahnriemen, schnell und einfach ausgetauscht werden kann.

Vorzugsweise sind die Meßwertgeber mit den entsprechenden Rädern oder den entsprechenden Wellen der Räder verbunden oder an oder in der Nähe von diesen angeordnet. Auf diese Weise ist eine einfach zu realisierende Aufnahme der Werte, die dem Maß des Antriebs entsprechen, möglich. Ferner vorzugsweise sind die Meßwertgeber Drehwinkelgeber.

Vorzugsweise ist mittels der Signalverarbeitungsvorrichtung ein Signal ausgebbar, das den Grad des Verschleißes der Antriebseinrichtung und insbesondere des Zahnriemens angibt. Wenn ferner vorzugsweise das angetriebene Element derart ausgestaltet ist, daß wenigstens ein weiteres Element antreibbar ist, wobei eine kontinuierliche Antriebsbewegung in eine intermittierende Bewegung umwandelbar ist, ist die Antriebseinrichtung derart auszugestalten, daß diese auch bei Wechsellast sicher und verläßlich betrieben werden kann.

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigt:

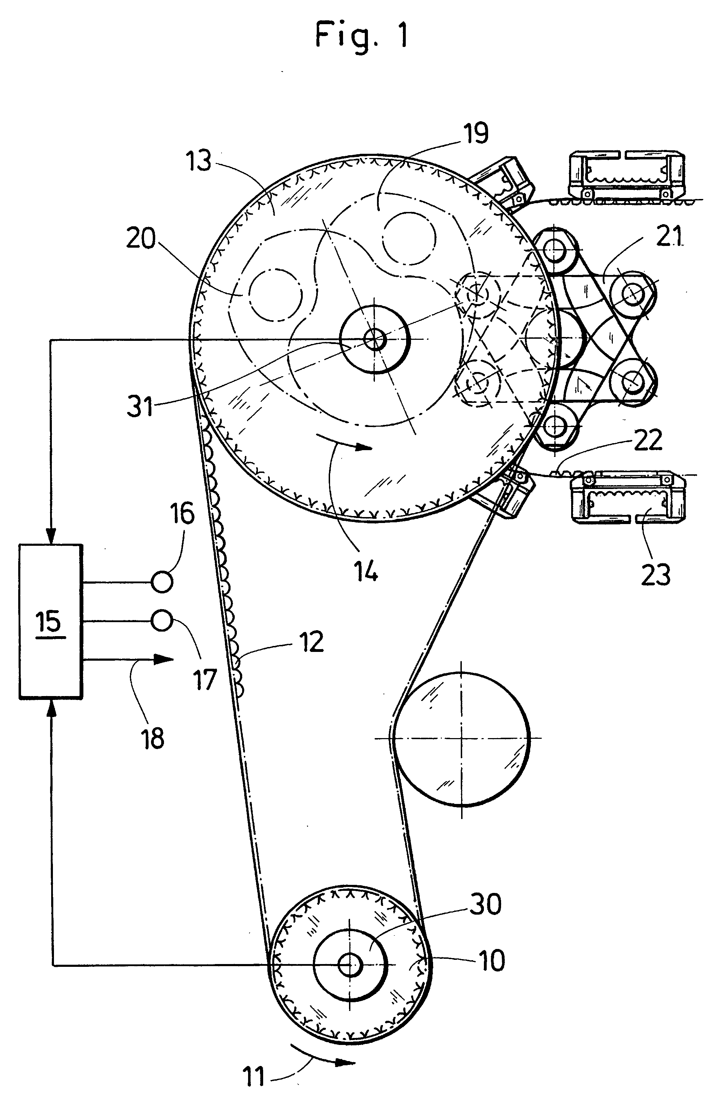

- Fig. 1: schematisch eine erfindungsgemäße Antriebseinrichtung in Aufsicht.

Fig.1 zeigt schematisch eine erfindungsgemäße Antriebseinrichtung in Aufsicht.

Ein antreibendes Rad 10 wird in Drehrichtung 11 über eine Welle angetrieben. Das antreibende Rad 10 führt einen Zahnriemen 12 mit, der ein angetriebenes Rad 13 antreibt. Das angetriebene Rad 13 wird somit in Drehrichtung 14 bewegt. Um den Zahnriemen 12 unter Spannung zu halten, wird eine Spannrolle 32 gegen den Zahnriemen 12 von außen gedrückt. Auf der Welle des angetriebenen Rades 13 sind zwei Nocken 19 und 20 angeordnet, die ein Rollensterngetriebe 21 antreiben, so daß dieses eine intermittierende Bewegung ausführt. Das Rollensterngetriebe 21 ist in Wirkverbindung mit einem Kammernband 22, auf dem Kammern 23 angeordnet sind und gibt die intermittierende Bewegung auf das Kammernband 22 weiter. Die hier angeordneten Kammern 23 dienen zur Bestückung von Zigarettenblöcken und zur Weitergabe von Zigarettenblöcken in eine oder mehrere Bahnen einer Zigarettenpackmaschine.

Auf den Wellen der Räder 10 und 13 sind Drehwinkelgeber 30 und 31 angeordnet, die die Winkelgeschwindigkeit oder ein Winkelmaß ausgeben. Die ausgegebenen Signale gelangen zu einer Signalverarbeitungsvorrichtung 15, in der die ausgegebenen Signale fortlaufend mit Sollwerten für zulässige oder nicht zulässige Abweichungen verglichen werden. Hierbei wird beispielsweise die Differenz der ausgegebenen Werte gebildet, wobei insbesondere das Übertragungsverhältnis berücksichtigt wird. In diesem Ausführungsbeispiel ist beispielsweise ein Übertragungsverhältnis von ca. 1 : 2,37 dargestellt. Wenn sich das antreibende Rad 10 um beispielsweise 90° gedreht hat, sollte sich das angetriebene Rad um ca. 37,98° gedreht haben. Dieses entspricht dann dem Sollwert. Bei einer entsprechenden Abweichung von diesem Sollwert können bei vorgebbaren Abweichungswerten beispielsweise zunächst eine Lampe 16 und dann bei einer größeren Abweichung eine Lampe 17 zum Leuchten gebracht werden, um einen erhöhten Grad eines Verschleißes anzuzeigen. Erst bei einer noch größeren Abweichung bzw. einem noch höheren Grad des Verschleißes kann ein Stoppsignal 18 von der Signalverarbeitungsvorrichtung 15 an die Antriebseinrichtung bzw. die Steuerung der Antriebseinrichtung gesendet werden. Durch dieses Stoppsignal 18 wird dann die Maschine entweder vollständig oder teilweise gestoppt. Die leuchtenden Lampen 16 und/oder 17 können als Warnsignale dienen.

Bei zunehmendem Verschleiß würden beispielsweise die Winkelgeschwindigkeit oder der Drehwinkel des angetriebenen Rades im Verhältnis kleiner werden als die Winkelgeschwindigkeit oder der Drehwinkel des antreibenden Rades, wobei, wie eben schon dargestellt, das Übersetzungsverhältnis zu berücksichtigen ist. Ein relativ hoher Verschleiß findet dann statt, wenn, wie in diesem Ausführungsbeispiel dargestellt, von einer kontinuierlichen Antriebsbewegung von dem antreibenden Rad zum angetriebenen Rad eine Umwandlung in eine intermittierende Bewegung über die Nocken 19 und 20 zum Rollensterngetriebe 21 und dem damit gekoppelten Kammernband 22 stattfindet. Dieses liegt in der damit einhergehenden Wechsellast begründet. In einer Ruhephase der intermittierenden Bewegung existiert eine Last von nahezu 0, wohingegen bei dem Anlaufen bzw. während der Bewegung eine erhöhte Last existiert, was sogar zu einem Schlagen des Getriebes führen kann.

Besonders bevorzugt geben die Drehwinkelgeber 30 und 31 Frequenzsignale aus, die miteinander verglichen werden. Bei entsprechenden Abweichungen außerhalb eines vorgegebenen Toleranzbereiches werden ein oder mehrere Warnsignale abgegeben und bei einer größeren Abweichung wird ein Maschinenstopp ausgeführt.

### Bezugszeichenliste

- 10: antreibendes Rad
- 11: Drehrichtung
- 12: Zahnriemen
- 13: angetriebenes Rad
- 14: Drehrichtung
- 15: Signalverarbeitungsvorrichtung
- 16: Lampe
- 17: Lampe
- 18: Stoppsignal
- 19: Nocke
- 20: Nocke
- 21: Rollensterngetriebe
- 22: Kammernband
- 23: Kammer
- 30: Drehwinkelgeber
- 31: Drehwinkelgeber
- 32: Spannrolle

## Patentansprüche

1. Verfahren zur Überwachung des Verschleißes einer Antriebseinrichtung einer Maschine der tabakverarbeitenden Industrie mit wenigstens einem antreibenden Element (10) und wenigstens einem angetriebenen Element (13) mit den folgenden Verfahrensschritten
- Aufnehmen eines ersten Wertes, der ein Maß des Antriebs des wenigstens einen antreibenden Elements (10) ist,
- Aufnehmen eines zweiten Wertes, der ein Maß des Antriebs des wenigstens einen angetriebenen Elements (13) ist, und
- Vergleich der aufgenommen Werte.

2. Verfahren nach Anspruch 1, **dadurch gekennzeichnet, daß** die Antriebseinrichtung angehalten wird, wenn der Vergleich der Werte einen Unterschied ergibt, der größer als ein vorgebbarer Wert ist.

3. Verfahren nach Anspruch 2, **dadurch gekennzeichnet, daß** bei wenigstens einem weiteren vorgebbaren Wert eine Warnfunktion, insbesondere eine Warnanzeige, in Betrieb gesetzt wird.

4. Verfahren nach einem oder mehreren der Ansprüche 1 bis 3, **dadurch gekennzeichnet, daß** ein Verschleißgrad in Abhängigkeit des Unterschieds der aufgenommenen Werte angezeigt wird.

5. Verfahren nach einem oder mehreren der Ansprüche 1 bis 4, **dadurch gekennzeichnet, daß** das angetriebene Element (13) wenigsten ein weiteres Element (19, 20, 21) antreibt, das einen kontinuierlichen Antrieb in eine intermittierende Bewegung überführt.

6. Antriebseinrichtung einer Maschine der tabakverarbeitenden Industrie mit wenigstens einem antreibenden Element (10) und wenigstens einem angetriebenen Element (13), **dadurch gekennzeichnet, daß** das antreibende Element (10) einen ersten Meßwertgeber (30) umfaßt, der einen ersten Wert, der einem Maß des Antriebs des antreibenden Elements (10) entspricht, ausgibt, daß das angetriebene Element (13) einen zweiten Meßwertgeber (31) umfaßt, der einen zweiten Wert, der einem Maß des Antriebs des angetriebenen Elements (13) entspricht, ausgibt, und daß eine Signalverarbeitungsvorrichtung (15) vorgesehen ist, die mit den Meßwertgebern (30, 31) verbindbar ist.

7. Antriebseinrichtung nach Anspruch 6, **dadurch gekennzeichnet, daß** das antreibende Element (10) ein erstes Rad, insbesondere ein erstes Zahnrad umfaßt und das angetriebene Element (13) ein zweites Rad, insbesondere ein zweites Zahnrad, umfaßt.

8. Antriebseinrichtung nach Anspruch 7, **dadurch gekennzeichnet, daß** das antreibende Element (10) ferner einen Antriebsriemen (12), insbesondere einen Zahnriemen, umfaßt, der in Wirkverbindung mit dem ersten Rad und dem zweiten Rad steht.

9. Antriebseinrichtung nach Anspruch 7 und/oder 8, **dadurch gekennzeichnet, daß** die Meßwertgeber (30, 31) an den entsprechenden Rädern oder entsprechenden Wellen der Räder angeordnet sind.

10. Antriebseinrichtung nach einem oder mehreren der Ansprüche 6 bis 9, **dadurch gekennzeichnet, daß** die Meßwertgeber (30, 31) Drehwinkelgeber sind.

11. Antriebseinrichtung nach einem oder mehreren der Ansprüche 6 bis 10, **dadurch gekennzeichnet, daß** mittels der Signalverarbeitungsvorrichtung (15) ein Signal ausgebbar ist, das den Grad des Verschleißes der Antriebseinrichtung und insbesondere des Zahnriemens (12) angibt.

12. Antriebseinrichtung nach einem oder mehreren der Anspruch 6 bis 11, **dadurch gekennzeichnet, daß** das angetriebene Element (13) derart ausgestaltet ist, daß wenigstens ein weiteres Element (19, 20, 21) antreibbar ist, wobei eine kontinuierliche Antriebsbewegung in eine intermittierende Bewegung umwandelbar ist.

## Claims

1. Method of monitoring the wear of a drive system of a machine used in the tobacco-processing industry having at least one driving element (10) and at least one driven element (13) comprising the following method steps:
- detection of a first value, which is a measurement of the driving operation of the at least one driving element (10),
- detection of a second value, which is a measurement of the driving operation of the at least one driven element (13), and
- comparison of the detected values.

2. Method as claimed in claim 1, **characterised in that** the drive system is stopped if a comparison of the values results in a difference greater than a pre-settable value.

3. Method as claimed in claim 2, **characterised in that** if at least one other pre-settable value appears, an alarm function, in particular a warning indicator, is triggered.

4. Method as claimed in one or more of claims 1 to 3, **characterised in that** a degree of wear is indicated depending on the difference in the detected values.

5. Method as claimed in one or more of claims 1 to 4, **characterised in that** the driven element (13) drives at least one other element (19, 20, 21), which converts a continuous driving motion into an intermittent motion.

6. Drive system of a machine for the tobacco industry, with at least one driving element (10) and at least one driven element (13), **characterised in that** the driving element (10) has a first sensor which transmits a first value corresponding to a measurement of the driving operation of the driving element (10), the driven element (13) has a second sensor (31) which transmits a second value corresponding to a measurement of the driving operation of the driven element (13) and a signal-processing device (15) is provided, which can be connected to the sensors (30, 31).

7. Drive system as claimed in claim 6, **characterised in that** the driving element (10) has a first wheel, in particular a first gear wheel, and the driven element (13) has a second wheel, in particular a second gear wheel.

8. Drive system as claimed in claim 7, **characterised in that** the driving element (10) additionally has a drive belt (12), in particular a cog belt, which is linked to the first wheel and the second wheel during operation.

9. Drive system as claimed in claim 7 and/or 8, **characterised in that** the sensors (30, 31) are disposed on the corresponding wheels or corresponding shafts of the wheels.

10. Drive system as claimed in one or more of claims 6 to 9, **characterised in that** the sensors (30, 31) are angle of rotation sensors.

11. Drive system as claimed in one or more of claims 6 to 10, **characterised in that** a signal can be transmitted by the signal-processing device (15), which indicates the degree of wear of the drive system and in particular of the cog belt (12).

12. Drive system as claimed in one or more of claims 6 to 11, **characterised in that** the driven element (13) is designed so that at least one other element (19, 20, 21) can be driven, whereby a continuous driving motion can be converted into an intermittent motion.

## Revendications

1. Procédé pour surveiller l'usure d'un dispositif d'entraînement d'une machine pour l'industrie de traitement du tabac, comprenant au moins un élément d'entraînement (10) et au moins un élément entraîné (13), comprenant les étapes consistant à
- enregistrer une première valeur, qui est une mesure de l'entraînement d'au moins un des éléments d'entraînement (10),
- enregistrer une seconde valeur, qui est une mesure de l'entraînement d'au moins un des éléments entraînés (13), et
- comparer les valeurs enregistrées.

2. Procédé selon la revendication 1, **caractérisé en ce que** le dispositif d'entraînement est arrêté, lorsque la comparaison des valeurs donne une différence, qui est supérieure à une valeur prédéterminée.

3. Procédé selon la revendication 2, **caractérisé en ce que** dans au moins une autre valeur prédéterminée, une fonction d'avertissement est mise en marche, en particulier un voyant.

4. Procédé selon l'une ou plusieurs des revendications 1 à 3, **caractérisé en ce qu'**un degré d'usure est indiqué en fonction de la différence des valeurs enregistrées.

5. Procédé selon l'une ou plusieurs des revendications 1 à 4, **caractérisé en ce que** l'élément entraîné (13) entraîne au moins un autre élément (19, 20, 21), qui transforme un entraînement continu en un mouvement discontinu.

6. Dispositif d'entraînement d'une machine pour l'industrie de traitement du tabac comprenant au moins un élément d'entraînement (10) et au moins un élément entraîné (13), **caractérisé en ce que** l'élément d'entraînement (10) comprend un indicateur de valeurs mesurées (30), qui sort une première valeur correspondant à une mesure de l'entraînement de l'élément d'entraînement (10), **en ce que** l'élément entraîné (13) comprend un deuxième indicateur de valeurs mesurées (31), qui sort une seconde valeur correspondant à une mesure de l'entraînement de l'élément entraîné (13), et **en ce qu'**est prévu un dispositif de traitement du signal (15), qui peut être raccordé aux indicateurs de valeurs mesurées (30, 31).

7. Dispositif d'entraînement selon la revendication 6, **caractérisé en ce que** l'élément d'entraînement (10) comprend une première roue, en particulier une première roue dentée, et l'élément entraîné (13) une seconde roue, en particulier une seconde roue dentée.

8. Dispositif d'entraînement selon la revendication 7, **caractérisé en ce que** l'élément d'entraînement (10) comprend en outre une courroie d'entraînement (12), en particulier une courroie dentée, qui est reliée de manière effective à la première roue et à la seconde roue.

9. Dispositif d'entraînement selon la revendication 7 et/ou 8, **caractérisé en ce que** les indicateurs de valeurs mesurées (30, 31) sont disposés sur les roues correspondantes ou les arbres correspondants.

10. Dispositif d'entraînement selon l'une ou plusieurs des revendications 6 à 9, **caractérisé en ce que** les indicateurs de valeurs mesurées (30, 31) sont des indicateurs d'écarts angulaires.

11. Dispositif d'entraînement selon l'une ou plusieurs des revendications 6 à 10, **caractérisé en ce qu'**un signal qui indique le degré d'usure du dispositif d'entraînement (15), et en particulier de la courroie dentée (12), peut être sorti au moyen du dispositif de traitement du signal (15).

12. Dispositif d'entraînement selon l'une ou plusieurs des revendications 6 à 11, **caractérisé en ce que** l'élément entraîné (13) est conçu de telle sorte qu'au moins un autre élément (19, 20, 21) puisse être entraîné, moyennant quoi un mouvement d'entraînement continu peut être transformé en un mouvement discontinu.
